Europäisches Patentamt

**European Patent Office**

Office européen des brevets

(19)

(11) Publication number: **0 019 693**
**B1**

(12) **EUROPEAN PATENT SPECIFICATION**

(45) Date of publication of patent specification: **14.03.84**

(51) Int. Cl.³: **G 11 B 5/60** //G11B5/42

(21) Application number: **80101461.4**

(22) Date of filing: **20.03.80**

(54) **A magnetic head slider assembly.**

(30) Priority: **01.06.79 US 44750**

(43) Date of publication of application:
**10.12.80 Bulletin 80/25** ·

(45) Publication of the grant of the patent:
**14.03.84 Bulletin 84/11**

(84) Designated Contracting States:
**DE FR GB**

(56) References cited:
**DE - A - 2 129 488**
**FR - A - 2 402 270**
**GB - A - 1 410 264**
**US - A - 3 737 582**
**US - A - 3 744 127**
**US - A - 3 770 403**
**US - A - 4 130 847**

**PATENTS ABSTRACTS OF JAPAN, vol. 1, no.**
**30, March 29, 1977, page 1080E76**
**IBM TECHNICAL DISCLOSURE BULLETIN vol.**
**22, no. 8A, January 1980, Armonk, N.Y. US G.E.**
**GREGORY: "Wear-resistant magnetic head",**
**page 3176**

(73) Proprietor: **International Business Machines**
**Corporation**
**Old Orchard Road**
**Armonk, N.Y. 10504 (US)**

(72) Inventor: **Jacobs, Walter George**
**6793 Almaden Road**
**San Jose, California 95120 (US)**

(74) Representative: **Hobbs, Francis John**
**IBM United Kingdom Patent Operations Hursley**
**Park**
**Winchester, Hants, SO21 2JN (GB)**

## A magnetic head slider assembly

This invention relates to a magnetic head slider assembly.

In the data processing technology, flying magnetic heads are used extensively, particularly in magnetic disk files. As the technology progresses and data is packed more densely on the surface of the storage disk, the heads need to fly more closely to the disk surface. This is achieved by magnetic transducers mounted on slider elements which are shaped to provide aerodynamic action for flying the heads relative to rotating disks.

In the past, the slider elements have been formed from stainless steel, and more recently from nonmagnetic ceramic material. As the size of the magnetic transducer becomes smaller, which occurs when using thin film heads for example, the slider configuration also is reduced in size. To increase production quantities and reduce manufacturing costs, batch processing is employed. Under such conditions, the slider materials used in the past have exhibited problems with stress and shear and resiliency, resulting in loss by breakage or failure to meet stringent quality test requirements. US—A— 4,130,847 discloses a magnetic head slider assembly as described in the first part of claim 1. The features claimed in the second part of claim 1 provide a solution for the aforementioned problems.

According to the invention there is provided a magnetic head slider assembly comprising a slider body having three downwardly depending longitudinal rails being laterally spaced apart and extending from the leading end to the trailing end of the slider body, further having an air·bearing surface formed by the bottom surface of both outside rails together with the centre rail, at least one thin film transducer disposed at the trailing end of the slider body and longitudinally aligned with the centre rail and characterised in that the slider body is made of material substantially consisting of a pressed and sintered, or hot pressed composition of 80% to 60% by weight of $Al_2O_3$ and 20% to 40% by weight of TiC and having an average particle size not greater than 5 microns.

The invention will be now described by way of example with reference to the accompanying drawings in which:

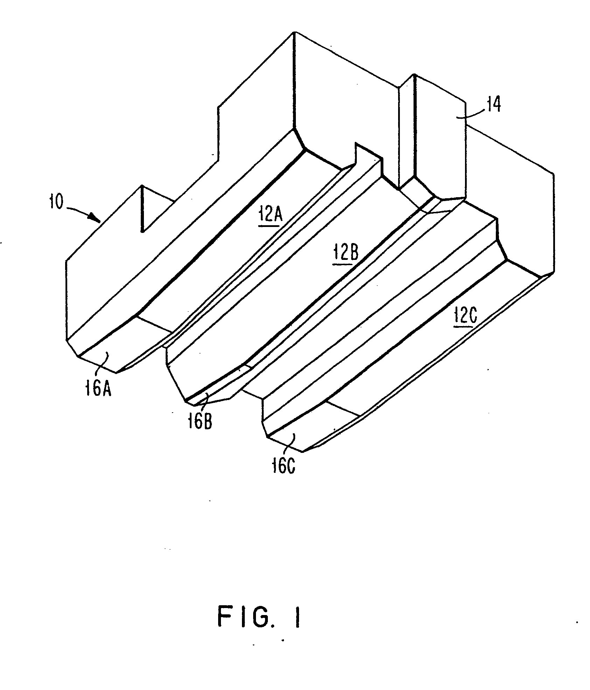

Figure 1 is an isometric view of a magnetic head slider, illustrated for the purpose of explanation of the invention.

Fig. 1 illustrates a magnetic head slider assembly including a slider body 10 having spaced longitudinal rails 12A, 12B, and 12C. The outer surfaces of the three rails each contribute to the air bearing surface that is formed when the slider is flying relative to the surface of a rotating magnetic disk. A magnetic head 14 including a thin film transducer is joined to the trailing end of the slider body for transducing action with relation to the record surface of the magnetic disk. The leading end of the slider body has tapered sections 16A, 16B, 16C along the rail areas.

U.S. Patents 3,855,625 and 4,130,847, each discloses a head slider body similar to the head slider illustrated in Figure 1, but does not disclose the specific material used in the present invention for forming the slider body.

The slider includes several slotted and angular portions which would be subject to chipping, breakage, and other deleterious effects during manufacture, resulting in undue loss of sliders and assemblies, which adds to production cost.

To minimize these problems, the present invention discloses the use of a specific slider material which is resistant to breakage, has improved machining properties and has good wear characteristics.

Whereas in the past large grain sized material, such as in the range of 10—100 microns is used, the present invention discloses the use of a fine grain mixture of $Al_2O_3$ and TiC which has been pressed and sintered, or hot pressed.

The mixture has an average particle size of less than five microns, and preferably the particles are one to two microns in length. The mixture is in the range of 60—80% $Al_2O_3$ and 40—20% TiC by weight. The high density mixture has low porosity, and exhibits improvements in Young's and Shear moduli of elasticity, and modulus of rupture. These improvements have enabled increased production yields of head sliders, of the type shown in Fig. 1.

To produce a material having the desired properties of resistance to breakage, improved machining and good wear, a quantity of $Al_2O_3$ and TiC powders are separately ground to particle sizes of 10 to 20 microns, by use of rubber lined mills and grinding media, such as alumina, tungsten carbide or zirconium. The ground powders of $Al_2O_3$ and TiC are then mixed in a ratio in a range of 80—60% $Al_2O_3$ to 20—40% TiC. Preferably the ratio of $Al_2O_3$ to TiC is 70% to 30%. To guarantee homogeneity, V-shell mixing is preferably employed.

A grain growth inhibitor of about 1 to 2% is added to the mixture. The blended powder mixture is then milled until the particle size of the powder is in the range of 1 to 2 microns. Milling is performed by a ball mill for about 200 hours, or by a vibratory energy mill for about 20 hours. A grinding medium formed of the same composition as the powder mixture, i.e., 70% $Al_2O_3$ and 30% TiC are used. The use of a similar composition for grinding reduces the impurity level significantly.

The milled powder is then dried and deagglomerated. The dry powder is measured and poured to fill a graphite pressing mould. The powder charge is then precompacted with an applied load of approximately $6.89476 \times 10^6$ N/M² to $2.06843 \times 10^7$ N/M² (1000 to 3000 pounds per square inch).

The precompacted mould is loaded into a hotpress and heated to a temperature in the range of 1400°C to 1650°C. The pressed part is hot pressed, when the desired temperature is reached, at a pressure between $2.75790 \times 10^7$ N/M² to $4.13686 \times 10^7$ N/M² (4000 and 6000 pounds psi). The pressed part is cooled to room temperature for a predetermined period to maintain a stress-free condition. The cooled part is removed from the mould, deburred and sandblasted to remove any excess graphite. The part is now ready for machining into the wafer, which will be used for the fabrication of the head sender element.

The ceramic material obtained by this process includes fine grains in the range of 1 to 2 microns average size. The material is relatively hard, and exceptionally resistant to breakage. Also, tests have established that head sliders using the fine grain material of the present invention exhibit greatly improved machining qualities, lower porosity, enhanced wear and substantially long lifetime use.

## Claims

1. A magnetic head slider assembly comprising a slider body (10) having three downwardly depending longitudinal rails (12A, 12B, 12C) being laterally spaced apart and extending from the leading end to the trailing end of the slider body, further having an air bearing surface formed by the bottom surface of both outside rails (12A, 12C) together with the centre rail (12B), at least one thin film transducer (14) disposed at the trailing end of the slider body and longitudinally aligned with the centre rail (12B) characterised in that the slider body is made of material substantially consisting of a pressed and sintered, or hot pressed composition of 80% to 60% by weight of $Al_2O_3$ and 20% to 40% by weight of TiC and having an average particle size not greater than 5 microns.

2. A magnetic head slider assembly as claimed in claim 1, in which said composition of aluminium oxide and titanium carbide has a ratio of 70% to 30%.

## Patentansprüche

1. Gleitstückaufbau für einen Magnetkopf, mit einem Gleitstückkörper (10), welcher drei nach unten abragende Längsschienen (12A, 12B, 12C), die seitlich im Abstand voneinander liegen und sich vom Vorderende zum hinteren Ende des Gleitstückkörpers erstrecken, und ferner eine durch die Bodenfläche der beiden äußeren Schienen (12A, 12C) zusammen mit der Mittelschiene (12B) gebildete Luftlagerfläche aufweist, wobei wenigstens ein Dünnfilmwandler (14) am hinteren Ende des Gleitstückkörpers und ausgerichtet auf die Mittelschiene (12B) angeordnet ist, dadurch gekennzeichnet, daß der Gleitstückkörper aus einem Material aufgebaut ist, das im wesentlichen aus einer gepreßten und gesinterten oder heißgepreßten Zusammensetzung aus 80% bis 60% $Al_2O_3$ und 20% bis 40% TiC besteht und eine mittlere Teilchengröße von nicht mehr als fünf Mikron hat.

2. Gleitstückaufbau für einen Magnetkopf nach Anspruch 1, bei welchem die Zusammensetzung aus Aluminiumoxid und Titancarbid ein Verhältnis von 70% zu 30% hat.

## Revendications

1. Ensemble de patin pour tête magnétique comportant un corps de patin (10) possédant trois rails longitudinaux (12A, 12B, 12C) dirigés vers le bas, distants latéralement les uns des autres et s'étendant depuis le bord avant jusqu'au bord arrière du corps du patin, et possédant en outre, une surface de support dans l'air formée par la surface inférieure des deux rails extérieurs (12A, 12C) et du rail central (12B) et au moins un transducteur à couches minces (14) disposé sur le bord arrière du corps du patin et aligné longitudinalement avec le rail central (12B), caractérisé en ce que le corps du patin est constitué en un matériau formé essentiellement par une composition pressée et frittée ou matricée à chaud comportant 80% à 60% en poids de $Al_2O_3$ et 20% à 40% en poids de TiC et dont la taille moyenne des particules ne dépasse pas 5 microns.

2. Ensemble de patin pour tête magnétique selon la revendication 1, dans lequel ladite composition d'oxyde d'aluminium et de carbure de titane est formée dans le rapport de 70% à 30%.

FIG. I